# EUROPÄISCHE PATENTANMELDUNG

(11) **EP 4 613 819 A1**
(43) Veröffentlichungstag der Anmeldung: **10.09.2025**
(21) Anmeldenummer: 24161597.0
(22) Anmeldetag: 05.03.2024
(51) Int. Cl.: C09D 1/02, C09D 1/04, C09D 5/10

(54) **BESCHICHTUNGSZUSAMMENSETZUNG UND IHRE VERWENDUNG**

(71) Anmelder: EWALD DÖRKEN AG, 58313 Herdecke (DE)
(72) Erfinder: WALTER, Susanne, 58313 Herdecke (DE); KÖSTER, Christopher, 58313 Herdecke (DE); KLÜPPEL, Ingo, 58313 Herdecke (DE); ROTH, Marcel, 40589 Düsseldorf (DE)
(74) Vertreter: Freiherr von Foullon, Alexander

(57) **Zusammenfassung**

Gegenstand der Erfindung ist eine wässrige Beschichtungszusammensetzung, enthaltend ein silikatbasiertes Bindemittel und mindestens 30 Gew.-% Metallpartikel, bezogen auf die Beschichtungszusammensetzung, und ihre Verwendung.

## Beschreibung

Die vorliegende Erfindung betrifft das technische Gebiet der Beschichtungen, insbesondere der Korrosionsschutzbeschichtungen.

Insbesondere betrifft die vorliegende Erfindung eine wässrige Beschichtungszusammensetzung, vorzugsweise zur Erzeugung von Korrosionsschutzbeschichtungen, sowie ihre Verwendung.

Weiterhin betrifft die vorliegende Erfindung ein Verfahren zur Herstellung einer Beschichtung, insbesondere einer Korrosionsschutzbeschichtung.

Schließlich betrifft die vorliegende Erfindung ein Verfahren zur Herstellung einer wässrigen Beschichtungszusammensetzung.

Beschichtungen werden auf unterschiedlichen Objekten und zu verschiedenen Anwendungszwecken als schützender oder dekorativer Überzug verwendet. Ein besonderer Aspekt, insbesondere bei technischen Objekten, gilt dabei dem Korrosionsschutz.

Korrosionserscheinungen an Metallen werden auf allen Gebieten der Technik beobachtet und sind von großer Bedeutung, da die Haltbarkeit bzw. Einsatzdauer von Maschinen, Fahrzeugen, Industrieanlagen oder auch Gebäuden oftmals im entscheidenden Maße von den Korrosionseigenschaften der verwendeten Metalle abhängig ist. Korrosion führt dazu, dass Metallteile ersetzt oder instandgesetzt werden müssen, was stets mit einem Aufwand an Zeit, Material und Kosten verbunden ist.

Gemäß DIN ISO 8044 ist Korrosion die physikochemische Wechselwirkung zwischen einem Metall und seiner Umgebung, die zu einer Veränderung der Eigenschaft des Metalls führt und die zu erheblichen Beeinträchtigungen der Funktionen des Metalls, der Umgebung oder des technischen Systems, in welchem das Metall verwendet wird, führen kann. Bei der Korrosion von Metallen handelt es sich in der Regel um elektrochemische Vorgänge, nämlich die Oxidation von Metallen durch Luftsauerstoff, gegebenenfalls in Gegenwart von Elektrolytlösungen, unter Ausbildung von Metalloxidschichten.

Da Korrosionsvorgänge die Haltbarkeit bzw. Einsatzzeit von Metallen bzw. Metallbauteilen oftmals bestimmen, ist es notwendig, die Korrosionsanfälligkeit und Korrosionsgeschwindigkeit von Metallen zu verringern. Um Metalle vor Korrosion zu schützen, werden einerseits passive Systeme - zum Beispiel Beschichtungen, wie Schutzlacke - eingesetzt, welche das Metall vor Umwelteinflüssen und somit Korrosion schützen sollen. Andererseits werden auch aktive Systeme verwendet, bei welchen das zu schützende Metall unter Ausnutzung elektrochemischer Vorhänge als Kathode eingesetzt und somit eine Oxidation des Metalls verhindert wird bzw. gebildete Metallionen umgehend reduziert werden. Der kathodische Korrosionsschutz kann einerseits durch Anlegen einer äußeren elektrischen Spannung erhalten werden, es ist andererseits jedoch auch möglich, dass das schützende Metall mit einem unedleren Metall, d.h. einem Metall mit einem niedrigeren, d.h. negativeren elektrochemischen Standardpotential, elektrisch in Kontakt zu bringen. Die beiden Metalle bilden dann ein elektrochemisches System, bei welchem das unedlere Metall die Anode, die sogenannte Opferanode, darstellt und oxidiert wird, während das edlere Metall die Kathode ist, an welcher reduziert wird.

Eine gängige Form des kathodischen Korrosionsschutzes ist die Beschichtung von Metallen bzw. Metallbauteilen mit einem unedleren Metall. Speziell beim Korrosionsschutz von Stahl wird dabei häufig auf die Verzinkung, d.h. eine Beschichtung auf Basis von Zink oder Zinklegierungen, zurückgegriffen.

Bei der Verzinkung wird üblicherweise Stahl, insbesondere Stahlblech, durch Eintauchen in Bäder aus geschmolzenem Zink im Rahmen der Feuerverzinkung mit elementarem Zink beschichtet.

Darüber hinaus ist es auch möglich, Stahlbleche bzw. Stahlbauteile elektrolytisch oder galvanisch durch Anlegung einer äußeren Spannung an Zinkionen enthaltende Elektrolytbäder zu verzinken.

Ein Spezialfall der Verzinkung ist die Verwendung von Zinkpigmente enthaltenden Beschichtungen, insbesondere Zinklamellenüberzügen, auch Zinklamellenprimer genannt. Zinklamellenüberzüge bzw. Zinklamellenprimer enthalten Zinklamellen, d.h. plättchenförmige Zinkpigmente, in einem überwiegend anorganischen Bindemittel. Die Mischung aus Bindemittel und Zinklamellen wird als Dispersion auf das zu schützende Metallteil aufgebracht und das Bindemittel anschließend vernetzt, wodurch eine geschlossene homogene Schicht mit einer Stärke von 5 bis 15 µm erhalten wird. Zinklamellenüberzüge weisen trotz Einbettung der Zinkpartikel in eine Bindemittelmatrix elektrische Leitfähigkeit auf und gewährleisten so einen hohen Schutz, insbesondere zeigen Zinklamellenüberzüge im Salzsprühtest am Ritz gemäß DIN ISO 9227 bei vergleichbarer Schichtdicke gegenüber sowohl feuerverzinkten als auch galvanisch bzw. elektrolytisch verzinkten Metallteilen eine deutlich verbesserte Korrosionsbeständigkeit auf.

Die überwiegend anorganische Matrix von Zinklamellenüberzügen bzw. -primern, in welche die Zinklamellen eingebettet sind, besteht üblicherweise hauptsächlich aus Siliziumdioxid oder Titandioxid. Typische Zinklamellenüberzüge, welche in Form der entsprechenden Beschichtungszusammensetzung auf ein Substrat aufgebracht werden, sind beispielsweise in der WO 2007/130838 A2 beschrieben.

Üblicherweise werden Zinklamellenprimer als lösemittelhaltige Systeme formuliert. Die Verwendung von organischen Lösemitteln sorgt einerseits dafür, dass feuchtigkeitsvernetzende Systeme eingesetzt werden können, d.h. Beschichtungszusammensetzungen, die bei Kontakt mit Feuchtigkeit, insbesondere aus der Umgebungsluft, die rasch vernetzen und aushärten. Andererseits kann das Lösemittel auch bei geringen Temperaturen oder bei einer nur kurzzeitigen Anwendung höherer Temperaturen vollständig entfernt werden. Lösemittelhaltige Systeme sind jedoch aufgrund der potenziellen Umwelt- und Gesundheitsgefährdung unter Gesichtspunkten des Arbeits- und Umweltschutzes ungünstig und unterliegen zunehmend strengeren regulatorischen Auflagen.

Eine umweltfreundliche Alternative zu lösemittelbasierten Beschichtungssystemen sind Beschichtungssysteme auf Wasserbasis. Wasser ist unter des arbeits- und umweltschutzrechtlichen Aspekten unbedenklich, hat jedoch im Vergleich zu organischen Lösemitteln eine oftmals geringere Flüchtigkeit und einen höheren Siedepunkt und somit Nachteile während des Trocknungsprozesses. Darüber hinaus ist insbesondere die im Bereich der Zinklamellenprimer etablierte feuchtigkeitsinduzierte Aushärtung und Vernetzung in wässrigen Systemen nicht möglich. Vielmehr erfolgt die Filmbildung üblicherweise durch eine thermisch induzierte Kondensation von Titanaten und Silikaten bzw. silanbasierten Verbindungen und somit über vergleichsweise langsame Kondensationsreaktionen, welche erst bei höheren Temperaturen ablaufen. Die Verwendung von wasserbasierten Systemen ist somit deutlich energie- und zeitaufwendiger als die Verwendung lösemittelbasierter Systeme.

Darüber hinaus schränkt die Anwesenheit von Korrosionsschutzpigmenten, insbesondere Zinkpigmenten, die Anwendungsmöglichkeiten von wässrig basierten Beschichtungszusammensetzungen weiter ein. Insbesondere zinkhaltige Korrosionsschutzpigmente sind weder im sauren noch im basischen Milieu stabil, sondern neigen aufgrund des amphoteren Verhaltens von Zink und der fehlenden Passivierung zur Wasserstoffbildung und Weißrostbildung. Insbesondere die Wasserstoffentwicklung führt zu einer Instabilität der Beschichtungszusammensetzung, welche in der Folge oftmals nur über eine kurze Topfzeit verfügt und nicht über einen längeren Zeitraum lagerbar ist.

Das Problem besteht insbesondere bei der Verwendung silikatischer Bindemittelsysteme auf Basis von Wassergläsern, da Silikate nur im basischen Milieu stabil sind und bei Verschiebung des pH-Werts in den neutralen oder gar sauren pH-Wertbereich als Kieselsäuren in Form amorpher Feststoffe ausfallen, wodurch die Beschichtungszusammensetzung unbrauchbar wird. Zwar ist es möglich, kolloidale Kieselsäuren herzustellen, die im Sauren angewendet werden und stabil sind, die Gewinnung dieser Verbindungen ist jedoch aufwendig und kostenintensiv und eine nachträgliche Einstellung des pH-Werts ist auch nur eingeschränkt möglich, da andernfalls Kondensationsreaktionen in der Beschichtungszusammensetzung ausgelöst werden können. Darüber hinaus ist die Stabilität von Zinkpartikeln bzw. zinkhaltigen Partikeln im stark basischen oder auch im sauren Bereich nicht gegeben. Diese Nachteile behindern die Verwendung wässriger Beschichtungszusammensetzungen und insbesondere den großtechnischen Einsatz preiswerter Wassergläser zur Herstellung von Bindemitteln für kathodische Korrosionsschutzbeschichtungen.

Es fehlt im Stand der Technik somit weiterhin an einem einfach zugänglichen und preiswerten Bindemittelsystem, welches wasserbasiert ist und in welches Korrosionsschutzpigmente über Monate stabil eingearbeitet werden können.

Weiterhin fehlt es im Stand der Technik an einem Bindemittelsystem, welches eine vereinfachte Bereitstellung von Zinklamellenprimern ermöglicht.

Eine Aufgabe der vorliegenden Erfindung ist somit darin zu sehen, die zuvor genannten, mit dem Stand der Technik verbundenen Nachteile und Probleme zu vermeiden, zumindest jedoch abzuschwächen.

Eine weitere Aufgabe der vorliegenden Erfindung ist darin zu sehen, ein wasserbasiertes Bindemittelsystem bereitzustellen, in welches Pigmente, insbesondere Korrosionsschutzpigmente langzeitstabil eingearbeitet werden können.

Gegenstand der vorliegenden Erfindung - gemäß einem ersten Aspekt der vorliegenden Erfindung - ist somit eine wässrige Beschichtungszusammensetzung nach Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung - gemäß einem zweiten Aspekt der vorliegenden Erfindung - ist die Verwendung einer vorgenannten wässrigen Beschichtungszusammensetzung nach Anspruch 11.

Wiederum weiterer Gegenstand der vorliegenden Erfindung - gemäß einem dritten Aspekt der vorliegenden Erfindung - ist ein Verfahren zur Beschichtung eines Substrats nach Anspruch 12; weitere, vorteilhafte Ausgestaltungen dieses Erfindungsaspekts sind Gegenstand des diesbezüglichen Unteranspruchs.

Wiederum weiterer Gegenstand der vorliegenden Erfindung - gemäß einem vierten Aspekt der vorliegenden Erfindung - ist eine Beschichtung nach Anspruch 14.

Schließlich ist weiterer Gegenstand der vorliegenden Erfindung - gemäß einem fünften Aspekt der vorliegenden Erfindung - ist ein Verfahren zur Herstellung einer Beschichtungszusammensetzung nach Anspruch 15.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass bei allen nachstehend genannten relativen bzw. prozentualen, insbesondere gewichtsbezogenen Mengenangaben zu beachten ist, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew.-% resultieren. Dies versteht sich für den Fachmann aber von selbst.

Zudem gilt, dass alle im Folgenden genannten Parameterangaben oder dergleichen grundsätzlich mit genormten oder explizit angegebenen Bestimmungsmethoden oder aber mit dem Fachmann an sich geläufigen Bestimmungsverfahren bestimmt bzw. ermittelt werden können.

Dies vorausgeschickt wird nachfolgend der Gegenstand der vorliegenden Erfindung näher erläutert.

Gegenstand der vorliegenden Erfindung - gemäß einem **ersten** Aspekt der vorliegenden Erfindung - ist somit eine wässrige Beschichtungszusammensetzung, enthaltend mindestens 30 Gew.-% Metallpartikel, bezogen auf die Beschichtungszusammensetzung, wobei die Beschichtungszusammensetzung ein silikatbasiertes Bindemittel aufweist, wobei das silikatbasierte Bindemittel ein silanmodifiziertes Silikat enthält, wobei das silanmodifizierte Silikat durch eines Silans in Gegenwart eines Silikats bei einem basischen pH-Wert erhalten wird.

Im Rahmen der vorliegenden Erfindung ist es üblicherweise vorgesehen, dass das silikatbasierte Bindemittel bzw. das silanmodifizierte Silikat durch zumindest teilweise Hydrolyse und ggf. zumindest teilweise Kondensation mindestens eines Silans in Gegenwart mindestens eines Silikats bei einem basischen pH-Wert erhalten wird. Vorzugsweise ist das Silan vollständig hydrolysiert.

Durch die zumindest teilweise, vorzugsweise vollständige, Hydrolyse des Silans in Gegenwart des Silikats wird das silanmodifizierte Silikat erhalten.

Vorzugsweise ist das silanmodifizierte Silikat das silikatbasierte Bindemittel bzw. besteht das silikatbasierte Bindemittel aus dem silanmodifizierten Silikat.

Gemäß einer bevorzugten Ausführungsform der vorliegenden Erfindung ist es vorgesehen, dass das silikatbasierte Bindemittel bzw. das silanmodifizierte Silikat durch Hydrolyse und zumindest teilweise Kondensation eines Silans in Gegenwart eines Silikats bei einem basischen pH-Wert erhalten wird.

Durch die Verwendung eines silanmodifizierten Silikats in oder als silikatbasiertes Bindemittel ist es möglich, wässrige Beschichtungszusammensetzungen zu erhalten, deren pH-Wert flexibel eingestellt werden kann. Es hat sich überraschenderweise gezeigt, dass nach erfolgter Hydrolyse und ggf. Kondensation des Silans in Gegenwart eines Silikats bei einem basischen pH-Wert das resultierende silanmodifizierte Silikat auch bei pH-Werten im neutralen Bereich oder sogar im sauren Bereich stabil ist und gerade nicht ausfällt, wie dies beispielsweise bei Wassergläsern der Fall ist.

Die erfindungsgemäße Beschichtungszusammensetzung bietet somit die Möglichkeit, eine wässrige Beschichtungszusammensetzung, insbesondere für kathodische Korrosionsschutzbeschichtungen bereitzustellen, deren pH-Wert derart angepasst werden kann, dass Pigmente, insbesondere auch zinkhaltige Pigmente, ohne aufwändige Behandlung, beispielsweise mittels Beschichtung, stabil in einer wässrigen Beschichtungszusammensetzung gelagert werden können.

Unter stabil ist dabei zu verstehen, dass die Beschichtungszusammensetzung sich in ihren chemischen und/oder physikalischen Eigenschaften nicht oder zumindest nicht wesentlich ändert und dass insbesondere dass keine Gasentwicklung einsetzt. Im Rahmen der Erfindung ist es vorzugsweise vorgesehen, dass die Beschichtungszusammensetzung über einen Zeitraum von mindestens 10 Tagen, vorzugsweise mindestens 14 Tagen, bevorzugt mindestens 28 Tage Tagen stabil ist.

Gleichermaßen kann es im Rahmen der vorliegenden Erfindung vorgesehen sein, dass die Beschichtungszusammensetzung über einen Zeitraum von 10 Tagen bis 4 Monaten, insbesondere 14 Tagen bis 3 Monaten, vorzugsweise 1 Monat bis 2 Monaten, stabil ist.

Unter einem silanmodifizierten Silikat ist im Rahmen der vorliegenden Erfindung ein Silikat zu verstehen, in dessen Gegenwart mindestens ein Silan zumindest teilweise hydrolysiert und ggf. kondensiert wurde. Es ist bislang noch nicht geklärt, welcher Art die Wechselwirkung zwischen hydrolysiertem Silan und Silikat letztendlich ist. Das hydrolysierte Silan scheint jedoch zumindest teilweise an die Silanolfunktionen des Silikats zu binden. Die Wechselwirkung zwischen Silan und Silikat zeigt sich insbesondere daran, dass Lösungen des silanmodifizierten Silikats problemlos angesäuert werden können, während aus basischen Lösungen von Silikaten, insbesondere Wassergläsern, beim Ansäuren amorphe Feststoffe ausgefällt werden. Auch Gemische von vorkondensierten Silanen und Silikaten zeigen nicht das Verhalten der erfindungsgemäß verwendeten silanmodifizierten Silikate, sondern führen während des Ansäuerns auch zur Bildung von Niederschlägen.

Bei den im Rahmen der vorliegenden Erfindung verwendeten Metallpartikeln handelt es sich insbesondere um Pigmente, vorzugsweise um Korrosionsschutzpigmente, wie beispielsweise Zinkstaub oder Zinkflakes bzw. Zinklegierungsflakes.

Die erfindungsgemäße wässrige Beschichtungszusammensetzung ist vorzugsweise eine Beschichtungszusammensetzung zur Erzeugung kathodischer Korrosionsschutzbeschichtungen.

Unter einem Bindemittel, auch Binder genannt, ist im Rahmen der vorliegenden Erfindung eine Substanz oder eine Kombination verschiedener Substanzen zu verstehen, welche weitere Komponenten der Beschichtungszusammensetzung zu binden sowie Verbindungen zum Substrat herzustellen vermag. Allgemein sind Bindemittel Stoffe, die an den Phasengrenzen anderer Stoffe chemische Bindungen herstellen oder begünstigen oder Effekte wie Kohäsion, Adsorption und Adhäsion bzw. Reibung auslösen oder vergrößern. Sie verbinden Stoffe, indem sie sie aufnehmen, anlagern, zusammenhalten, vernetzen oder verkleben.

Im Rahmen der vorliegenden Erfindung ist es üblicherweise vorgesehen, dass der pH-Wert der Beschichtungszusammensetzung im Bereich von pH 1 bis pH 14 einstellbar ist.

Im Rahmen der vorliegenden Erfindung ist es insbesondere vorgesehen, dass die Beschichtungszusammensetzung einen pH-Wert im Bereich von 1 bis 14, insbesondere 2 bis 13, vorzugsweise 3 bis 12, bevorzugt 4 bis 11, aufweist. Der pH-Wert der erfindungsgemäßen Beschichtungszusammensetzung kann aufgrund der Verwendung des silanmodifizierten Silikats speziell auf die weiteren Bestandteile der Beschichtungszusammensetzung, wie beispielsweise Füllstoffe, Co-Bindemittel oder Metallpigmente abgestimmt werden. Insbesondere ist es möglich, den pH-Wert auf das Redoxpotential der verwendeten Metallpartikel bzw. die Ausbildung von Passivierungsschichten auf den Metallpartikeln abzustimmen, so dass diese über einen langen Zeitraum stabil in der Beschichtungszusammensetzung gelagert werden können. Dies ist insbesondere wichtig und vorteilhaft bei der Verwendung von zinkhaltigen Partikeln in wässrigen Systemen, welche andernfalls zur Entwicklung von Wasserstoff neigen, wodurch die Beschichtungszusammensetzung letztlich unbrauchbar wird.

Durch die Verwendung silanmodifizierter Silikatverbindungen bzw. silanmodifizierter Wassergläser wird gleichfalls keine Carbonatisierung beobachtet, wenn der pH-Wert der Beschichtungszusammensetzung auf Werte kleiner oder gleich 9, vorzugsweise kleiner oder gleich 8,5 eingestellt ist, wobei trotz der Absenkung des pH-Werts das Silkat nicht ausfällt. Die pH-Werteinstellung kann dabei durch Zugeben von Säuren erfolgen. Eine Verwendung der silanmodifizierten Silikatverbindungen bzw. der silanmodifizierten Wassergläser im neutralen oder sauren pH-Bereich ist bevorzugt, insbesondere da im sauren Bereich die Absorption von Kohlenstoffdioxid in Form von Carbonaten deutlich reduziert ist.

Besonders bevorzugt wird es Rahmen der vorliegenden Erfindung allerdings, wenn die Beschichtungszusammensetzung einen pH-Wert im Bereich von 7 bis 9, insbesondere 8 bis 9, aufweist. In diesem pH-Wertbereichen werden einerseits aluminium- und zinkhaltige Metallpartikel passiviert und eine Carbonatisierung, welche Aussehen und Haptik der Beschichtung nachteilig beeinflusst, wird zuverlässig unterbunden.

Die pH-Werteinstellung kann dabei insbesondere durch Zugabe von organischen und/oder anorganischen Säuren, vorzugsweise anorganischen Säuren, erfolgen. Es hat sich bewährt, wenn die Säure ausgewählt ist aus der Gruppe von Phosphorsäure, Phosphonsäure, organischen Phosphonsäuren, Salpetersäure, Schwefelsäure, Essigsäure, Zitronensäure, Propansäure, Acrylsäure, Oxalsäure, Fumarsäure, Benzoesäure, Bernsteinsäure, Maleinsäure, Salicylsäure, Aminosalicylsäure, Nicotinsäure, Ameisensäure, Apfelsäure, Weinsäure, Ascorbinsäure, Propansäure, Milchsäure, Phthalsäure und deren Mischungen, insbesondere Phosphorsäure, Phosphonsäure, organischen Phosphonsäuren, Salpetersäure, Schwefelsäure, Essigsäure, Zitronensäure, Propansäure, un deren Mischungen, vorzugsweise Phosphorsäure, Phosphonsäure, organischen Phosphonsäuren, Salpetersäure und deren Mischungen, vorzugsweise Phosphorsäure, Phosphonsäure organischen Phosphonsäuren und deren Mischungen.

Was nun die Menge an Metallpartikeln in der Beschichtungszusammensetzung anbelangt, so kann diese naturgemäß in weiten Bereichen variieren. Es hat sich jedoch bewährt, wenn die Beschichtungszusammensetzung die Metallpartikel in Mengen von mehr als 32 Gew.-%, insbesondere mehr als 34 Gew.-%, vorzugsweise mehr als 40 Gew.-%, bevorzugt mehr als 45 Gew.-%, bezogen auf die Beschichtungszusammensetzung, aufweist.

Gleichermaßen kann es vorgesehen sein, dass die Beschichtungszusammensetzungen die Metallpartikel in Mengen von 30 bis 95 Gew.-%, insbesondere 32 bis 90 Gew.-%, vorzugsweise 34 bis 90 Gew.-%, bevorzugt 40 bis 85 Gew.-%, besonders bevorzugt 45 bis 80 Gew.-%, bezogen auf die Beschichtungszusammensetzung, aufweist. Im Rahmen der vorliegenden Erfindung können somit sehr große Anteile an Metallpartikeln, insbesondere Metallpigmenten in der Zusammensetzung vorhanden sein.

Die Metallpartikel, insbesondere Metallpigmente, können dabei aus allen erdenklichen Metallpartikeln ausgewählt sein. So sind beispielsweise Korrosionsschutzpigmente, aber auch Effektpigmente denkbar. Im Rahmen der vorliegenden Erfindung werden vorzugsweise Korrosionsschutzpigmente verwendet. Es hat sich besonders bewährt, wenn die Metallpartikel ausgewählt sind aus Partikeln, insbesondere Pigmenten, des Eisens, Nickels, Chroms, Magnesiums, Aluminiums, Zinks und deren Mischungen und Legierungen. Gemäß eine bevorzugten Ausführungsform der vorliegenden Erfindung sind die Metallpartikel ausgewählt aus Partikeln, insbesondere Pigmenten, des Magnesiums, Aluminiums, Zinks und deren Mischungen und Legierungen.

Besonders bevorzugt ist im Rahmen der vorliegenden Erfindung, wenn die Metallpartikel ausgewählt sind aus Partikeln, insbesondere Pigmenten, des Zinks, aus Zinklegierungen und deren Mischungen. Die Verwendung von Zinklegierungen ist dabei im Rahmen der vorliegenden Erfindung besonders bevorzugt.

Wenn Metallpartikel auf Basis von Zinklegierungen verwendet werden, so sind die Zinklegierungen üblicherweise ausgewählt aus Zink-Bismut-Legierungen, Zink-Aluminium-Legierungen und/oder Zink-Aluminium-Magnesium-Legierungen. Besonders bevorzugt wird es in diesem Zusammenhang, wenn die Zinklegierungen ausgewählt sind aus Zink-Aluminium-Legierungen und/oder Zink-Aluminium-Magnesium-Legierungen. Die besten Ergebnisse werden erhalten, wenn die Zinklegierung eine Zink-Aluminium-Magnesium-Legierung ist.

Was die Art der Partikel anbelangt, so können diese aus sämtlichen geeigneten Metallpartikeln ausgewählt werden. Es hat sich jedoch bewährt, wenn die Metallpartikel ausgewählt sind aus plättchenförmigen, kornförmigen, insbesondere sphärischen, Metallpartikel und deren Mischungen.

Gemäß einer bevorzugten Ausführungsform ist es in diesem Zusammenhang vorgesehen, dass die Beschichtungszusammensetzung allein kornförmige, insbesondere sphärische, Metallpartikel, aufweist, insbesondere als Korrosionsschutzpigmente.

Wenn die Beschichtungszusammensetzung kornförmige, insbesondere sphärische, Metallpartikel aufweist, so hat es sich bewährt, wenn die Beschichtungszusammensetzung die Metallpartikel in Mengen von mehr als 55 Gew.-%, insbesondere mehr als 60 Gew.-%, vorzugsweise mehr als 65 Gew.-%, bevorzugt mehr als 70 Gew.-%, bezogen auf die Beschichtungszusammensetzung, aufweist.

Gleichermaßen kann es vorgesehen sein, dass die Beschichtungszusammensetzungen die Metallpartikel in Mengen von 50 bis 95 Gew.-%, insbesondere 55 bis 90 Gew.-%, vorzugsweise 60 bis 90 Gew.-%, bevorzugt 65 bis 85 Gew.-%, besonders bevorzugt 70 bis 80 Gew.-%, bezogen auf die Beschichtungszusammensetzung, aufweist.

Gemäß einer weiteren bevorzugten Ausführungsform der vorliegenden Erfindung weist die erste Schicht plättchenförmige und kornförmige, insbesondere sphärische Metallpartikel auf. Durch die Verwendung von plättchenförmigen und kornförmigen, insbesondere sphärischen, Metallpartikeln kann die Korrosionsschutzwirkung der kathodischen Korrosionsschutzbeschichtungen nochmals deutlich verbessert werden, da plättchenförmige Metallpartikel, die sogenannten Lamellen, deutlich verbesserten Korrosionsschutz gewährleisten. Allerdings steigt mit zunehmendem Anteil an plättchenförmigen Metallpartikeln, d.h. Lamellen, die Viskosität der Beschichtungszusammensetzung stark an.

Wenn die Beschichtungszusammensetzung sowohl plättchenförmige als auch kornförmige, insbesondere sphärische, Metallpartikel aufweist, so hat es sich bewährt, wenn die Beschichtungszusammensetzung ein gewichtsbezogenes Verhältnis von plättchenförmigen zu kornförmigen Metallpartikeln im Bereich von 19 : 1 bis 1 : 19, insbesondere 10 : 1 bis 1 : 15, vorzugsweise 1 : 1 bis 1 : 12, bevorzugt 1 : 2 bis 1 : 10, besonders bevorzugt 1 : 3 bis 1 : 9, aufweist. Vorzugweise weist die Beschichtungszusammensetzung somit einen hohen Anteil an insbesondere kornförmigen, vorzugsweise sphärischen, Metallpartikeln auf.

Gemäß einer wiederrum bevorzugten Ausführungsform der vorliegenden Erfindung weist die Beschichtungszusammensetzung plättchenförmige Metallpartikel auf. Insbesondere weist die Beschichtungszusammensetzung gemäß dieser Ausführungsform der vorliegenden Erfindung vorzugsweise allein plättchenförmige Metallpartikel als Korrosionsschutzpigmente auf. Da die Verwendung von plättchenförmigen Metallpartikeln, bzw. Lamellen mit einem starken Anstieg der Viskosität mit der Beschichtungszusammensetzung verbunden ist, weisen derartige Beschichtungszusammensetzungen einen Anteil an Metallpartikeln im Bereich von 30 bis 70 Gew.-%, insbesondere 32 bis 65 Gew.-%, vorzugsweise 34 bis 60 Gew.-%, bezogen auf die Beschichtungszusammensetzung, auf.

Plättchenförmige Metallpartikel werden im allgemeinen Sprachgebrauch auch Flakes oder Lamellen genannt. Plättchenförmige Metallpartikel weisen in einer Raumrichtung eine deutlich geringere Ausdehnung auf, welche nachfolgend als Dicke bezeichnet wird; die Ausdehnung in den beiden anderen Raumrichtungen wird nachfolgend als Durchmesser bezeichnet. Plättchenförmige Metallpartikel weisen insbesondere mindestens eine Hauptausdehnungsrichtung auf. Kornförmige Metallpartikel sind unregelmäßig geformte Metallpartikel, wogegen sphärische Metallpartikel näherungsweise Kugelgestalt besitzen. Die Verwendung von sphärischen Metallpartikeln ist gegenüber der Verwendung von kornförmigen Metallpartikeln üblicherweise bevorzugt.

Insbesondere werden dann besonders gute Ergebnisse erhalten, wenn sphärische oder kornförmige Metallpartikel aus reinem Zink bestehen und plättchenförmige Metallpartikel aus Zinklegierungen.

Was nun die Dimensionierung der Metallpartikel anbelangt, so kann diese in weiten Bereichen variieren.

Im Allgemeinen ist es vorgesehen, dass die plättchenförmigen Metallpartikel eine Dicke von 50 bis 1.000 nm, insbesondere 60 bis 750 nm, vorzugsweise 80 bis 600 nm, bevorzugt 100 bis 500 nm aufweisen.

Gleichermaßen kann es vorgesehen sein, dass die plättchenförmigen Metallpartikel einen Durchmesser, insbesondere eine Länge entlang ihrer Hauptausdehnungsrichtung, von 1 bis 25 µm, insbesondere 2 bis 20 µm, vorzugsweise 5 bis 18 µm, bevorzugt 5 bis 15 µm, aufweisen.

Darüber hinaus kann es vorgesehen sein, dass die plättchenförmigen Metallpartikel eine Partikelgrößenverteilung D50 von 8 bis 20 µm, insbesondere 10 bis 16 µm, aufweisen. Weiterhin ist es möglich, dass die plättchenförmigen Metallpartikel eine Partikelgrößenverteilung D90 von 20 bis 30 µm, insbesondere 22 bis 28 µm, aufweisen.

Wenn im Rahmen der vorliegenden Erfindung kornförmige, insbesondere sphärische, Metallpartikel verwendet werden, so hat es sich bewährt, wenn die Metallpartikel Durchmesser im Bereich von 500 nm bis 20 µm, insbesondere 500 nm bis 10 µm, 500 nm bis 5 µm, aufweisen.

Darüber hinaus kann es vorgesehen sein, dass die kornförmigen, insbesondere sphärischen, Metallpartikel eine Partikelgrößenverteilung D50 von 1 bis 10 µm, insbesondere 2 bis 8 µm, aufweisen. Weiterhin ist es möglich, dass die kornförmigen, insbesondere sphärischen, Metallpartikel eine Partikelgrößenverteilung D90 von 6 bis 20 µm, insbesondere 8 bis 17 µm, aufweisen.

Im Rahmen der vorliegenden Erfindung ist es üblicherweise vorgesehen, dass das Silikat des silikatbasierten Bindemittels bzw. des silanmodifizierten Silikats ein Wasserglas ist.

Im Rahmen der vorliegenden Erfindung wird es bevorzugt, wenn das Wasserglas ausgewählt ist aus der Gruppe von Lithiumwasserglas, Natriumwasserglas, Kaliumwasserglas und deren Mischungen. Besonders gute Ergebnisse werden im Rahmen der vorliegenden Erfindung erhalten, wenn das Wasserglas ausgewählt ist aus der Gruppe von Natriumwasserglas, Kaliumwasserglas und deren Mischungen.

Besonders bevorzugt wird es im Rahmen der vorliegenden Erfindung, wenn das Wasserglas Kaliumwasserglas ist.

Was nun das verwendete Silan anbelangt, so kann dieses auch aus einer Vielzahl geeigneter Silane ausgewählt werden. Im Rahmen der vorliegenden Erfindung hat es sich jedoch bewährt, wenn das Silan des silikatbasierten Bindemittels bzw. des silanmodifizierten Silikats ausgewählt ist aus der Gruppe von epoxyfunktionellen Silanen, phenoxyfunktionellen Silanen, vinylfunktionellen Silanen, aminofunktionellen Silanen und deren Mischungen, vorzugsweise epoxyfunktionellen Silanen, aminofunktionellen Silanen und deren Mischungen.

Weiterhin ist es im Rahmen der vorliegenden Erfindung vorzugsweise vorgesehen, dass das Silan mindestens eine hydrolysierbare chemische Gruppe, vorzugsweise eine unmittelbar an das Silizium gebundene hydrolysierbare chemische Gruppe, aufweist. Die hydrolysierbare chemische Gruppe ist vorzugsweise ausgewählt aus Alkoxygruppen, Carboxygruppen, Halogeniden und deren Mischungen. Bevorzugt ist die hydrolysierbare chemische Gruppe ausgewählt aus der Gruppe von Methoxygruppe, Ethoxygruppe, Propoxygruppe, iso-Propoxygruppe, Butoxygruppe, Acetoxy, Chlorid und deren Mischungen, insbesondere Methoxygruppe, Ethoxygruppe und deren Mischungen.

Die vorgenannten Silane erlauben insbesondere eine gute Haftung sowohl an den verwendeten Substraten als auch an etwaigen weiteren aufzubringenden Schichten.

Im Rahmen der vorliegenden Erfindung hat es sich besonders bewährt, wenn das Silan ausgewählt ist aus der Gruppe von Methacryloxymethyltrimethoxysilan, Methacryloxymethyltriethoxysilan, 3-Aminopropylmethyldimethoxysilan, 3-Aminopropyltriethoxysilan, N-(2-Aminoethyl)-3-aminopropylmethyldimethoxysilan, 3-Mercaptopropyltrimethoxysilan, N-(2-Aminoethyl)-3-aminopropyltrimethoxysilan, N-(2-Aminoethyl)-3-aminopropyltrimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)propyltriethoxysilan, N-(2-Aminoethyl)-3-aminopropylmethyldimethoxysilan, 3-Aminopropyltrimethoxysilan, 3-Ureidopropyltrimethoxysilan, Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)methyldimethoxysilan, Methacryloxymethyltrimethoxysilan, 3-Methacryloxypropyltriacetoxysilan, N-Methyl[3-(Trimethoxysilyl)propyl]carbamat, N-Trimethoxysilylmethyl-O-methylcarbamat, N-Dimethoxy(methyl)silylmethyl-O-methylcarbamat, Tris-[3-(trimethoxysilyl)propyl]-isocyanurat, 3-Glycidoxypropyltrimethoxysilan, 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan, 1,2-Bis(triethoxysilyl)-ethan und deren Mischungen.

Besonders gute Ergebnisse werden erhalten, wenn das Silan ausgewählt ist aus der Gruppe von 3-Aminopropylmethyldimethoxysilan, 3-Aminopropyltriethoxysilan, N-(2-Aminoethyl)-3-aminopropylmethyldimethoxysilan, N-(2-Aminoethyl)-3-aminopropyltrimethoxysilan, N-(2-Aminoethyl)-3-aminopropyltriethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)propyltriethoxysilan, N-(2-Aminoethyl)-3-aminopropylmethyldimethoxysilan, 3-Aminopropyltrimethoxysilan, Glycidoxypropyltrimethoxysilan, 3-Glycidoxypropyltriethoxysilan und deren Mischungen, vorzugsweise N-(2-Aminoethyl)-3-aminopropyltrimethoxysilan, N-(2-Aminoethyl)-3-aminopropyltriethoxysilan, Glycidoxypropyltrimethoxysilan, 3-Glycidoxypropyltriethoxysilan und deren Mischungen.

Im Rahmen der vorliegenden Erfindung ist es üblicherweise vorgesehen, dass die Beschichtungszusammensetzung das silikatbasierte Bindemittel in Mengen von 1 bis 30 Gew.-%, insbesondere 1 bis 20 Gew.-%, vorzugsweise 2 bis 15 Gew.-%, bevorzugt 3 bis 10 Gew.-%, besonders bevorzugt 4 bis 8 Gew.-%, bezogen auf die Beschichtungszusammensetzung, aufweist.

Gleichermaßen kann es vorgesehen sein, dass die Beschichtungszusammensetzung das silikatbasierte Bindemittel in Mengen von mindestens 1 Gew.-%, insbesondere mindestens 2 Gew.-%, vorzugsweise mindestens 3 Gew.-%, bevorzugt mindestens 4 Gew.-%, bezogen auf die Beschichtungszusammensetzung, aufweist.

Darüber hinaus kann es auch vorgesehen sein, dass die Beschichtungszusammensetzung das silikatbasierte Bindemittel in Mengen von höchstens 30 Gew.-%, insbesondere höchstens 20 Gew.-%, vorzugsweise höchstens 15 Gew.-%, bevorzugt höchstens 10 Gew.-%, besonders bevorzugt höchstens 8 Gew.-%, bezogen auf die Beschichtungszusammensetzung, aufweist.

Gemäß einer weiteren bevorzugten Ausführungsform der vorliegenden Erfindung kann es vorgesehen sein, dass die Zusammensetzung mindestens ein weiteres Bindemittel aufweist.

Das weitere Bindemittel kann dabei ein anorganisches und/oder ein organisches Bindemittel sein. Bevorzugt wird im Rahmen der vorliegenden Erfindung als weiteres Bindemittel jedoch ein organisches Bindemittel eingesetzt.

Als anorganische Bindemittel können insbesondere Bindemittel auf Basis von Silanen, Silikaten, Kieselsäuren oder auch Titanaten eingesetzt werden.

Im Rahmen der vorliegenden Erfindung hat es sich bewährt, wenn das weitere, insbesondere organische Bindemittel, ein organisches Polymer aufweist. Vorzugsweise besteht das weitere, insbesondere organische Bindemittel, aus dem organischen Polymer bestehen. Es hat sich bewährt, wenn das organische Polymer ausgewählt ist aus der Gruppe von Acrylaten, Styrol-Acrylat-Copolymeren, Polyurethanen, Polyvinylacetat, Polyvinylalkohol, Ethylcellulose, Carboxymethylcellulose, Polyvinylpyrrolidon, Polyvinylbutyral und deren Mischungen und Copolymeren. Vorzugsweise ist das Polymer ausgewählt ist aus der Gruppe von Acrylaten, Styrol-Acrylat-Copolymeren, Polyurethanen, Polyvinylacetat, Polyvinylalkohol und deren Mischungen und Copolymeren.

Bevorzugt ist das Polymer ausgewählt aus der Gruppe von Acrylaten, Polyurethanen und deren Mischungen und Copolymeren, insbesondere von Acrylaten und Acrtylatcopolymeren. Besonders gute Ergebnisse werden im Rahmen der vorliegenden Erfindung erhalten, wenn das Polymer ein Acrylat ist.

Für den Fall, dass die Beschichtungszusammensetzung ein weiteres Bindemittel enthält, so ist es üblicherweise vorgesehen, dass die Beschichtungszusammensetzung das weitere Bindemittel in Mengen von 1 bis 20 Gew.-%, insbesondere 1 bis 15 Gew.-%, vorzugsweise 2 bis 10 Gew.-%, bevorzugt 3 bis 8 Gew.-%, besonders bevorzugt 3 bis 7 Gew.-%, bezogen auf die Beschichtungszusammensetzung, aufweist.

Gleichermaßen kann es im Rahmen der vorliegenden Erfindung vorgesehen sein, dass die Beschichtungszusammensetzung das weitere Bindemittel in Mengen von mindestens 1 Gew.-%, insbesondere mindestens 2 Gew.-%, vorzugsweise mindestens 3 Gew.-%, bezogen auf die Beschichtungszusammensetzung, aufweist.

Darüber hinaus ist es jedoch auch möglich, dass die Beschichtungszusammensetzung das weitere Bindemittel in Mengen von höchstens 20 Gew.-%, insbesondere höchstens 15 Gew.-%, vorzugsweise höchstens 10 Gew.-%, bevorzugt höchstens 8 Gew.-%, besonders bevorzugt höchstens 7 Gew.-%, bezogen auf die Beschichtungszusammensetzung, aufweist.

Wie zuvor bereits ausgeführt, ist die erfindungsgemäße Beschichtungszusammensetzung eine wässrige Beschichtungszusammensetzung.

Der Anteil an Wasser, welcher in der Beschichtungszusammensetzung enthalten ist, kann dabei je nach Art der verwendeten Metallpartikel und des vorgesehenen Einsatzzweckes in weiten Bereichen variieren. Üblicherweise enthält die Beschichtungszusammensetzung Wasser in Mengen von mindestens 3 Gew.-%, insbesondere mindestens 5 Gew-%, vorzugsweise mindestens 7 Gew.-%, bevorzugt mindestens 8 Gew.-%, besonders bevorzugt mindestens 10 Gew.-%, bezogen auf die Beschichtungszusammensetzung.

Weiterhin kann es vorgesehen sein, dass die Beschichtungszusammensetzung Wasser in Mengen von bis zu 40 Gew.-%, insbesondere bis zu 30 Gew-%, vorzugsweise bis zu 25 Gew.-%, bevorzugt bis zu 20 Gew.-%, bezogen auf die Beschichtungszusammensetzung, aufweist.

Gemäß einer bevorzugten Ausführungsform der vorliegenden Erfindung ist es vorgesehen, dass die Beschichtungszusammensetzung Wasser in Mengen von 3 bis 40 Gew.-%, insbesondere 5 bis 30 Gew-%, vorzugsweise 7 bis 25 Gew.-%, bevorzugt 8 bis 20 Gew.-%, besonders bevorzugt 10 bis 20 Gew.-%, bezogen auf die Beschichtungszusammensetzung, aufweist.

Darüber hinaus ist es auch möglich, dass die Beschichtungszusammensetzung mindestens ein Additiv aufweist.

Wenn die Beschichtungszusammensetzung ein Additiv aufweist, so hat es sich bewährt, wenn die Beschichtungszusammensetzung das Additiv in Mengen von 0,1 bis 10 Gew.-%, insbesondere 0,2 bis 8 Gew.-%, vorzugsweise 0,3 bis 5 Gew.-%, bevorzugt 0,5 bis 2 Gew.-%, besonders bevorzugt 0,7 bis 1,5 Gew.-%, bezogen auf die Beschichtungszusammensetzung, aufweist.

Besonders gute Ergebnisse werden im Rahmen der vorliegenden Erfindung erhalten, wenn das Additiv ausgewählt ist aus der Gruppe von Verdickern, Rheologiestellmitteln, Netzmitteln, Konservierungsmitteln, Stabilisatoren, Säuren und/oder Basen, entschäumenden Komponenten, Filmbildnern, Verlaufsmitteln, UV-Absorbern, Füllstoffen, pH-Stabilisatoren, pH-Einstellmitteln und deren Mischungen.

Gemäß einer bevorzugten Ausführungsform der vorliegenden Erfindung weist die wässrige Beschichtungszusammensetzung somit
(a) ein silikatbasiertes Bindemittel, insbesondere in Mengen von 1 bis 30 Gew.-%,
(b) Metallpartikel, insbesondere in Mengen von mindestens 30 Gew.-%, vorzugsweise in Mengen von 30 bis 95 Gew.-%,
(c) Wasser, insbesondere in Mengen von 3 bis 40 Gew.-%, und
(d) mindestens ein Additiv, insbesondere in Mengen von 0,1 bis 10 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Weiterhin kann es vorgesehen sein, dass Beschichtungszusammensetzung mindestens ein Schmiermittel enthält. Durch die Verwendung eines Schmiermittels kann die Reibzahl der resultierenden Beschichtung gezielt eingestellt werden.

Im Rahmen der vorliegenden Erfindung werden besonders gute Ergebnisse erhalten, wenn das Schmiermittel ausgewählt ist aus der Gruppe von Wachsen, Kunststoffpartikeln, insbesondere aus Polyetherketon (PEK), Polyetheretherketon (PEEK), Polyphenylensulfid (PPS), Polyethersulfon (PES), Polyetherimid (PEI), Polyamidimid (PAI), Polytetrafluorethylen (PTFE), Polyvinylidenfluorid (PVDF) und deren Mischungen, mikronisiertem Schwefel und deren Mischungen, insbesondere ausgewählt ist aus der Gruppe von Wachsen, Kunststoffpartikeln, insbesondere aus Polyetherketon (PEK), Polyetheretherketon (PEEK), Polyphenylensulfid (PPS), Polyethersulfon (PES), Polyetherimid (PEI), Polyamidimid (PAI) und deren Mischungen, mikronisiertem Schwefel und deren Mischungen. Besonders gute Ergebnisse werden im Rahmen der vorliegenden Erfindung erhalten, wenn das Schmiermittel ein Wachs ist.

Wenn es sich bei dem Schmiermittel um ein Wachs handelt, so hat es sich bewährt, wenn das Wachs ausgewählt ist aus der Gruppe von natürlichen Wachsen, teilsynthetischen Wachsen, synthetischen Wachsen und deren Mischungen. Vorzugsweise handelt es sich bei dem Wachs um ein synthetisches Wachs.

Gleichermaßen wird es im Rahmen der vorliegenden Erfindung bevorzugt, wenn das Wachs ausgewählt ist aus der Gruppe von Bienenwachs, Carnaubawachs, Montanwachs, modifiziertem Montanwachs, Amidwachs, Polypropylenwachs, Polyethylenwachs, HDPE-Wachs (High-Density-Polyethylene-Wachs), oxidiertem HDPE-Wachs, Ethylen-Vinylacetatwachs, Polyethylenglycolwachs, Polyesterwachs, Fischer-Tropsch-Wachs und deren Mischungen, vorzugsweise Polypropylenwachs, Polyethylenwachs, HDPE-Wachs, oxidiertem HDPE-Wachs, Ethylen-Vinylacetatwachs, Polyethylenglycolwachs, Polyesterwachs, Fischer-Tropsch-Wachs und deren Mischungen.

Besonders gute Ergebnisse werden in diesem Zusammenhang erhalten, wenn das Wachs ausgewählt ist aus der Gruppe von Polypropylenwachs, Polyethylenwachs, HDPE-Wachs, oxidiertem HDPE-Wachs, Fischer-Tropsch-Wachs und deren Mischungen.

Ganz besonders bevorzugt ist im Rahmen der vorliegenden Erfindung, wenn das Wachs ein Polyethylenwachs (PE-Wachs) ist.

Weiterhin wird es Rahmen der Erfindung bevorzugt, wenn die Beschichtungszusammensetzung das Schmiermittel in Mengen von 1 bis 15 Gew.-%, insbesondere 2 bis 12 Gew.-%, vorzugsweise 3 bis 10 Gew.-%, bevorzugt 4 bis 8 Gew.-%, bezogen auf die Beschichtungszusammensetzung, enthält.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 30 Gew.-%,
(b) Metallpartikel, insbesondere in Mengen von mindestens 30 Gew.-%, vorzugsweise in Mengen von 30 bis 95 Gew.-%,
(c) Wasser, insbesondere in Mengen von 3 bis 40 Gew.-%,
(d) mindestens ein Additiv, insbesondere in Mengen von 0,1 bis 10 Gew.-%, und
(e) mindestens ein Schmiermittel, insbesondere in Mengen von 1 bis 15 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer weiteren bevorzugten Ausführungsform der vorliegenden Erfindung ist es vorgesehen, dass die Beschichtungszusammensetzung mindestens einen Füllstoff aufweist.

Gemäß einer besonders bevorzugten Ausführungsform der vorliegenden Erfindung ist der Füllstoff ein plättchenförmiger Füllstoff. Speziell plättchenförmige Füllstoffe führen bei Verwendung plättchenförmiger Metallpigmente zu besonders gleichmäßigen Oberflächen und ermöglichen auch eine gezielte Einstellung der Reibzahl der resultierenden Beschichtung. Besonders bevorzugt wird die Reibzahl der Beschichtung eingestellt, indem die Beschichtungszusammensetzung ein Schmiermittel und einen plättchenförmigen Füllstoff enthält.

Wenn die Beschichtungszusammensetzung einen Füllstoff enthält, so ist es üblicherweise vorgesehen, dass die Beschichtungszusammensetzung den Füllstoff in Mengen von 0,1 bis 25 Gew.-%, insbesondere 1 bis 20 Gew.-%, vorzugsweise 3 bis 20 Gew.-%, bevorzugt 5 bis 15 Gew.-%, besonders bevorzugt 8 bis 15 Gew.-%, bezogen auf die Beschichtungszusammensetzung, aufweist.

Im Rahmen der vorliegenden Erfindung hat es sich bewährt, wenn der Füllstoff ausgewählt ist aus der Gruppe von Glimmer, Talkum, Schichtsilikaten und deren Mischungen.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 30 Gew.-%,
(b) Metallpartikel, insbesondere in Mengen von mindestens 30 Gew.-%, vorzugsweise in Mengen von 30 bis 95 Gew.-%,
(c) Wasser, insbesondere in Mengen von 3 bis 40 Gew.-%,
(d) mindestens ein Additiv, insbesondere in Mengen von 0,1 bis 10 Gew.-%,
(e) mindestens ein Schmiermittel, insbesondere in Mengen von 1 bis 15 Gew.-%, und
(e) mindestens ein Füllstoff, insbesondere in Mengen von 0,1 bis 25 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Darüber hinaus weist die Beschichtungszusammensetzung vorzugsweise nur geringe Mengen an organischen Lösemitteln und flüchtigen organischen Verbindungen (Volatile Organic Compounds, VOC) auf. Üblicherweise enthält die Beschichtungszusammensetzung organische Lösemittel und flüchtige organische Verbindungen in Mengen von weniger als 3 Gew.-%, insbesondere weniger als 1 Gew.-%, vorzugsweise weniger als 0,5 Gew.-%, bevorzugt weniger als 0,3 Gew.-%, besonders bevorzugt weiniger als 0,1 Gew.-%, bezogen auf die Beschichtungszusammensetzung. Vorzugsweise ist die Beschichtungszusammensetzung frei von organischen Lösemitteln und flüchtigen organischen Verbindungen.

Was nun die Viskosität der erfindungsgemäßen Beschichtungszusammensetzung anbelangt, so kann diese in weiten Bereichen variieren. Besonders gute Ergebnisse werden im Rahmen der vorliegenden Erfindung jedoch erhalten, wenn die Beschichtungszusammensetzung eine dynamische Viskosität bei 20 °C nach Brookfield im Bereich von 2 bis 5.000 mPas, insbesondere 5 bis 1.000 mPas, vorzugsweise 5 bis 500 mPas, bevorzugt 10 bis 100 mPas, insbesondere bevorzugt 30 bis 50 mPas, aufweist. Die Viskosität kann dabei insbesondere gemäß ISO 2431 bestimmt werden.

Wiederum weiterer Gegenstand der vorliegenden Erfindung - gemäß einem **zweiten** Aspekt der vorliegenden Erfindung - ist die Verwendung einer zuvor beschriebenen wässrigen Beschichtungszusammensetzung zur Herstellung einer Korrosionsschutzbeschichtung, insbesondere einer kathodischen Korrosionsschutzbeschichtung.

Wie zuvor bereits dargelegt, eignet sich die erfindungsgemäße Beschichtungszusammensetzung in hervorragender Weise zur Herstellung kathodischer Korrosionsschutzbeschichtungen, da sie es insbesondere ermöglicht, den pH-Wert speziell an das Redoxpotential und die Ausbildung von Passivierungsschichten der verwendeten Metallpartikel anzupassen.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Verwendung entsprechend gelten.

Wiederum weiterer Gegenstand der vorliegenden Erfindung - gemäß einem **dritten** Aspekt der vorliegenden Erfindung - ist ein Verfahren zur Beschichtung eines Substrats, wobei eine zuvor beschriebene Beschichtungszusammensetzung auf ein Substrat aufgebracht und anschließend getrocknet wird.

Im Rahmen der vorliegenden Erfindung ist es üblicherweise vorgesehen, dass das Substrat ein Metall aufweist, insbesondere ein metallisches Substrat ist.

Darüber hinaus wird es bevorzugt, wenn das Metall ausgewählt ist aus der Gruppe von Eisen, Aluminium, Magnesium und deren Mischungen und Legierungen.

Besonders gute Ergebnisse werden erhalten, wenn das Metall des Substrats ausgewählt ist aus Eisen und dessen Legierungen, insbesondere ein Stahl ist.

Unter einem Substrat ist im Rahmen der vorliegenden Erfindung jedes geeignete dreidimensionale Objekt und jede Oberfläche zu verstehen, auf welche die erfindungsgemäße Beschichtungszusammensetzung aufgebracht werden kann. Vorzugsweise handelt es sich bei dem Substrat jedoch um einen Gegenstand, insbesondere ein Bauteil, auf welche die Beschichtungszusammensetzung zumindest partiell aufgebracht wird.

Im Rahmen der vorliegenden Erfindung hat es sich weiterhin bewährt, wenn die Beschichtungszusammensetzung mit einer Schichtdicke im Bereich von 1 bis 200 µm, insbesondere 1 bis 150 µm, vorzugsweise 2 bis 130 µm, besonders bevorzugt 4 bis 120 µm, ganz besonders bevorzugt 5 bis 120 µm, auf das Substrat aufgebracht wird.

Gemäß einer bevorzugten Ausführungsform der Erfindung wird die Beschichtungszusammensetzung mit einer Schichtdicke im Bereich von 1 bis 50 µm, insbesondere 1 bis 40 µm, vorzugsweise 2 bis 30 µm, besonders bevorzugt 4 bis 25 µm, ganz besonders bevorzugt 5 bis 20 µm, auf das Substrat aufgebracht.

Gemäß einer weiteren Ausführungsform der Erfindung, insbesondere zur Herstellung Dickschichtbeschichtungen, wird die Beschichtungszusammensetzung mit einer Schichtdicke im Bereich von 30 bis 200 µm, insbesondere 40 bis 150 µm, vorzugsweise 50 bis 130 µm, besonders bevorzugt 60 bis 120 µm, ganz besonders bevorzugt 70 bis 120 µm, auf das Substrat aufgebracht

Die Beschichtungszusammensetzung kann durch jedes geeignete Verfahren aufgebracht werden. Üblicherweise wird die Beschichtungszusammensetzung jedoch mittels Spritzen, Streichen, Rakeln, Walzen, Tauchen oder Tauchschleudern auf das Substrat aufgebracht. Besonders gute Ergebnisse werden dabei erhalten, wenn die Beschichtungszusammensetzung mittels Spritzen, Tauchen oder Tauchschleudern aufgebracht wird. Besonders bevorzugt wird es im Rahmen der vorliegenden Erfindung, wenn die Beschichtungszusammensetzung vollflächig auf das Substrat aufgebracht wird.

Üblicherweise wird die Beschichtungszusammensetzung nach Aufbringen auf das Substrat getrocknet. Die Temperatur, bei welcher die Beschichtungszusammensetzung getrocknet wird, kann in Abhängigkeit des gewählten Substrats in weiten Bereichen variieren.

Es hat sich jedoch als zweckdienlich erwiesen, wenn die Beschichtungszusammensetzung bei Temperaturen im Bereich von 5 bis 300 °C, insbesondere 10 bis 250 °C, vorzugsweise 15 bis 200 °C, bevorzugt 20 bis 150 °C, getrocknet wird.

Gleichermaßen hat es sich als zweckmäßig erwiesen, wenn die Beschichtungszusammensetzung für einen Zeitraum von 1 Minute bis 30 Stunden, insbesondere 5 Minuten bis 20 Stunden, vorzugsweise 10 Minuten bis 16 Stunden, getrocknet wird.

Im Rahmen der vorliegenden wird es bevorzugt, wenn die Beschichtunngszusammensetzung in etwa bei Raumtemperatur, d.h. bei ca. 25 °C getrocknet wird, insbesondere bei Temperaturen im Bereich von 10 bis 40 °C, insbesondere 15 bis 35 °C, vorzugsweise 20 bis 30 °C. Die Trocknungsdauern liegen in diesem Fall üblicherweise im Bereich von 1 bis 30 Stunden, insbesondere 5 bis 20 Stunden, vorzugsweise 8 bis 16 Stunden.

Für weitergehende Einzelheiten zu dem erfindungsgemäßen Verfahren zur Beschichtung eines Substrats kann auf die vorherigen Ausführungen zu den weiteren Erfindungsaspekten verwiesen werden, welche im Hinblick auf das erfindungsgemäße Verfahren entsprechend gelten.

Darüber hinaus ist weiterer Gegenstand der vorliegenden Erfindung - gemäß einem **vierten** Aspekt der vorliegenden Erfindung - eine Beschichtung, erhältlich nach einem vorbeschriebenen Verfahren oder mit einer vorbeschriebenen Beschichtungszusammensetzung.

Im Rahmen der vorliegenden Erfindung ist es üblicherweise vorgesehen, dass die Beschichtung eine Schichtdicke im Bereich von 1 bis 150 µm, insbesondere 1 bis 120 µm, vorzugsweise 1 bis 110 µm, bevorzugt 2 bis 100 µm, besonders bevorzugt 5 bis 100 µm, aufweist.

Gemäß einer bevorzugten Ausführungsform ist es vorgesehen, dass die Beschichtung eine Schichtdicke im Bereich von 1 bis 45 µm, insbesondere 1 bis 40 µm, vorzugsweise 1 bis 35 µm, bevorzugt 2 bis 20 µm, besonders bevorzugt 5 bis 15 µm, aufweist.

Es ist jedoch auch möglich, dass die Beschichtung als Dickschichtbeschichtung eingesetzt wird. In diesem Fall ist es bevorzugt, wenn die Beschichtung eine Schichtdicke im Bereich von 30 bis 150 µm, insbesondere 40 bis 120 µm, vorzugsweise 50 bis 110 µm, bevorzugt 60 bis 100 µm, besonders bevorzugt 70 bis 100 µm, aufweist.

Was nun den Anteil an Metallpartikeln in der Beschichtung anbelangt, so kann dieser - wie schon bei der Beschichtungszusammensetzung - in weiten Bereichen variieren. Es hat sich jedoch im Rahmen der vorliegenden Erfindung bewährt, wenn die Beschichtung die Metallpartikel in Mengen von mehr als 50 Gew.-%, insbesondere mehr als 60 Gew.-%, vorzugsweise mehr als 70 Gew.-%, bevorzugt mehr als 80 Gew.-%, bezogen auf die Beschichtung, aufweist.

Gleichermaßen werden im Rahmen der vorliegenden Erfindung besonders gute Ergebnisse erhalten, wenn die Beschichtung die Metallpartikel in Mengen von 50 bis 99 Gew.-%, insbesondere 60 bis 98 Gew.-%, vorzugsweise 70 bis 98 Gew.-%, bevorzugt 80 bis 98 Gew.-%, bezogen auf die Beschichtung, aufweist.

Darüber hinaus ist es auch möglich, dass die Beschichtung das silikatbasierte Bindemittel in Mengen von 1 bis 30 Gew.-%, insbesondere 1 bis 25 Gew.-%, vorzugsweise 2 bis 20 Gew.-%, bevorzugt 3 bis 15 Gew.-%, bezogen auf die Beschichtung, aufweist.

Für weitergehende Einzelheiten zu der erfindungsgemäßen Beschichtung kann auf die vorhergehenden Ausführungen zu den übrigen Erfindungsaspekten verwiesen werden, welche in Bezug auf die erfindungsgemäße Beschichtung entsprechend gelten.

Schließlich ist weiterer Gegenstand der vorliegenden Erfindung - gemäß einem **fünften** Aspekt der vorliegenden Erfindung - ein Verfahren zur Herstellung einer zuvor beschriebenen Beschichtungszusammensetzung, wobei mindestens ein Silan in Gegenwart mindestens eines Silikats bei einem pH-Wert gleich oder größer 8.

Üblicherweise ist es im Rahmen der Erfindung vorgesehen, dass mindestens ein Silan in Gegenwart mindestens eines Silikats bei einem pH-Wert gleich oder größer 8 hydrolysiert, insbesondere zumindest teilweise hydrolysiert, vorzugsweise vollständig hydrolysiert, und gegebenenfalls insbesondere zumindest teilweise kondensiert wird.

Vorzugsweise ist es dabei im Rahmen der vorliegenden Erfindung vorgesehen, dass der pH-Wert während des Hydrolysierens und ggf. des Kondensierens des Silans in Gegenwart mindestens eines Silikats gleich oder größer 9, vorzugsweise gleich oder größer 10, bevorzugt gleich oder größer 11, beträgt.

Die Hydrolyse und ggf Kondensation des Silans in Gegenwart des Silikats erfolgt bei Temperaturen im Bereich von 10 bis 50 °C, insbesondere 10 bis 40 °C, vorzugsweise 15 bis 35 °C, bevorzugt 20 bis 30 °C.

Die Hydrolyse und ggf Kondensation erfolgt üblicherweise durch langsame Zugabe, meist über mehrere Stunden, maximal bis zu 12 Stunden, des Silans oder Silangemisches zu dem Silikat, vorzugsweise unter ständiger Durchmischung.

Die Hydrolyse und ggf. Kondensation wird üblicherweise einen Zeitraum von 1 bis 60 Stunden, vorzugsweise 12 bis 48 Stunden, durchgeführt.

Was nun das mengenmäßige Verhältnis von Silan zu Silikat anbelangt, so hat es sich bewährt, wenn Silan und Silikat in einem Gewichtsverhältnis von Silan zu Silikat von 2 : 1 bis 1 : 10, insbesondere 1 : 1 bis 1 : 5, vorzugsweise 1 : 1 bis 1 : 3, bevorzugt 1 : 1 bis 1 : 2, eingesetzt werden.

Gemäß einer besonders bevorzugten Ausführungsform der vorliegenden Erfindung werden Silan und Silkat in einem mengenbezogenen Verhältnis von stoffmengenbezogenen Teilen Silan zu Gewichtsteilen Silikat, berechnet als Festoffgehalt des Silikats, d.h. Mol Silan : Gramm Silkat, von 0,009 (mol Silan) : 10 (g Silikat) bis 0,0045 (mol Silan) : 1 (g Silikat), insbesondere 0,0045 : 1 bis 0,0045 : 5, vorzugsweise 0,0045 : 1 bis 0,0045 : 3, bevorzugt 0,0045 : 1 bis 0,0045 : 2, eingesetzt.

Gemäß einer bevorzugten Ausführungsform der vorliegenden Erfindung ist es vorgesehen, dass nach dem Hydrolysieren und ggf. dem Kondensieren des Silans in Gegenwart mindestens eines Silikats der pH-Wert im Bereich von 1 bis 14, insbesondere 2 bis 13, vorzugsweise 4 bis 12, bevorzugt 5 bis 11, eingestellt wird.

Die pH-Werteinstellung erfolgt im Allgemeinen durch die Zugabe von Säure und vorzugsweise bei Temperaturen im Bereich von 10 bis 50 °C, insbesondere 10 bis 40 °C, vorzugsweise 15 bis 35 °C, bevorzugt 20 bis 30 °C.

Darüber hinaus kann es im Rahmen der vorliegenden Erfindung vorgesehen sein, dass nach dem Hydrolysieren und ggf. dem Kondensieren des Silans in Gegenwart mindestens eines Silikats flüchtige Bestandteile aus dem Reaktionsgemisch entfernt werden. Bei den flüchtigen Bestandteilen handelt es sich insbesondere um Alkohole, welche bei der Hydrolyse der Silane freigesetzt werden.

Gleichermaßen kann es auch vorgesehen sein, dass der Feststoffgehalt des silikatbasierten Bindemittels auf mindestens 10 Gew.-%, insbesondere mindestens 15 Gew.-%, vorzugsweise mindestens 20 Gew.-%, bezogen auf das silikatbasierte Bindemittel, eingestellt wird.

Gemäß einer Ausführungsform der Erfindung wird das Verfahren zum Herstellen eines silanmodifizierten Silikats bzw. eines silanmodifizierten Wasserglases derart durchgeführt, dass eine Silan in Gegenwart einer Silikatverbindung bzw. eines Wasserglases bei einem pH-Wert gleich oder größer 8, insbesondere größer 11, zumindest teilweise hydrolysiert wird zu einem silanmodifizierten Silikat bzw. Wasserglas und anschließend der pH-Wert auf Werte kleiner 10, insbesondere kleiner 9, vorzugsweise im Bereich von 5 bis 9, eingestellt wird, insbesondere durch Zugabe von Säure.

Eine teilweise Hydrolyse von Silan und Silikat in wässriger alkalischer Lösung kann nach dem Ansäuern auf einen pH-Wert von 7 oder kleiner fortgesetzt werden, falls gewünscht bis hin zur vollständigen Hydrolyse.

Üblicherweise wird die Hydrolyse bzw. ggf. die Kondensation des Silans in Gegenwart des Silikats zu einer silanmodifizierten Silikatverbindung bzw. einem silanmodifizierten Wasserglas jedoch vollständig im Alkalischen durchgeführt.

Es ist auch möglich, beim Ansäuern einen pH-Wert zwischen 2 und 4 einzustellen, der erreicht und gehalten werden kann, ohne dass es zum Ausfällen oder Ausflocken der silanmodifizierten Silikatverbindung bzw. des silanmodifizierten Wasserglases kommt.

Für weitergehende Einzelheiten zu diesem erfindungsgemäßen Verfahren zur Beschichtung eines Substrats kann auf die vorherigen Ausführungen zu den weiteren Erfindungsaspekten verwiesen werden, welche im Hinblick auf das erfindungsgemäße Verfahren entsprechend gelten.

Der Gegenstand der vorliegenden Erfindung wird nachfolgend in nicht beschränkender Weise und rein exemplarisch anhand der Ausführungsbeispiele erläutert.

### Ausführungsbeispiele

### 1. Herstellung erfindungsgemäßer Bindemittelsysteme

Zur Herstellung der erfindungsgemäß eingesetzten Bindemittelsysteme werden Wassergläser vorgelegt und anschließend mit einem Silan versetzt. Die Mischung wird zur Hydrolyse und ggf. Kondensation der Silane zehn Stunden bei Raumtemperatur gerührt. Anschließend kann der pH-Wert der Mischung durch die Zugabe von Säuren gezielt eingestellt werden.

Der bei der Hydrolyse entstehende Alkohol wird in einem Rotationsverdampfer entfernt. In dem Rotationsverdampfer wird auch der Feststoffgehalt des resultierenden Gemischs auf ca. 50 % eingestellt.

Eine beispielhafte Liste von Materialkombinationen findet sich in der nachfolgenden Tabelle 1.

**Tabelle 1: Bindemittelmischungen (Wasserglas / Silan) zum Teil mit Veränderung des pH-Werts**

| | **Bindemittelsysteme** | | |
|---|---|---|---|
| **Bestandteile** | **1** [Gewichtsteile] | **2** [Gewichtsteile] | **3** [Gewichtsteile] |
| Lithiumpolysilikat¹ | 77,00 | - | - |
| Kaliumwasserglas² | - | 77,00 | 77,00 |
| DAMO³ | 23,00 | 23,00 | 23,00 |
| H₃PO₃/50 %ig | - | - | 19,00 |
| Summe | 100,00 | 100,00 | 119,00 |
| pH | 12 | 12 | 8,3 |

| | | | |
|---|---|---|---|
| ¹: Feststoffanteil 24 Gew.-% ²: Feststoffanteil 21 Gew.-% ³: 2-Aminomethyl-3-amino-propyltriethoxysilan | | | |

### 2. Herstellung einer erfindungsgemäßen Beschichtungszusammensetzung

Mit dem Bindemittelsystem 2 gemäß Tabelle 1 wird eine Korrosionsschutzbeschichtungszusammensetzung mit Zinkstaub hergestellt. Die genaue Zusammensetzung ist Tabelle 2 zu entnehmen. Zur Herstellung wird zunächst das erfindungsgemäße Bindemittel unter Rühren mit demineralisiertem Wasser versetzt, ehe die weiteren Bestandteile, nämlich Rheologiestellmittel, Füllstoff und Zinkstaub zugegeben werden.

**Tab. 2: Erfindungsgemäße Beschichtungszusammensetzung**

| **Bestandteil** | **Menge** [Gewichtsteile] |
|---|---|
| Bindemittel 2 | 8,70 |
| Wasser demineralisiert | 11,40 |
| Aerosil 200 (Kieselsäure) | 1,00 |
| Mica MU M2/1 (Glimmer) | 7,90 |
| EverZinc 4P16 (Zinkstaub) | 71,00 |

### 3. Korrosionstests

Mit der erfindungsgemäßen Beschichtungszusammensetzung werden anschließend Korrosionsschutztests gemäß DIN EN ISO 9227 durchgeführt.

Die Beschichtungszusammensetzung wird mit einer Schichtdicke von ca. 40 µm aufgetragen und bei 20 °C für 24 Stunden getrocknet. Nach einer Lagerung von einer Woche bei Umgebungsbedingungen wird der Korrosionsschutztest durchgeführt.

Die Ergebnisse sind für mehrere Beschichtungsvorgänge in der nachfolgenden Tabelle 3 angegeben.

**Tabelle 3: Korrosionstests**

| **Versuch Nr.** | **Trockenfilmdicke [µm]** | **Ritz 1 (h bis RRR)** | **Ritz 2 (h bis RRR)** |
|---|---|---|---|
| 1 | 30-35 | 1224 | 1224 |
| 2 | 32-36 | 1440 | 1512 |
| 3 | 33-36 | 1440 | 1440 |

Es zeigt sich, dass die erfindungsgemäße Beschichtungszusammensetzung hervorragende Korrosionsschutzeigenschaften aufweist, wobei sie wie handelsübliche kathodische Korrosionsschutzbeschichtungen auf Basis von Zinkstaub oder Zinklamellen verarbeitet werden, d.h. insbesondere durch Rakeln, Sprühen, Tauchen auf ein Substrat aufgebracht werden kann.

## Patentansprüche

1. Wässrige Beschichtungszusammensetzung, enthaltend mindestens 30 Gew.-% Metallpartikel, bezogen auf die Beschichtungszusammensetzung,
**dadurch gekennzeichnet,**
**dass** die Beschichtungszusammensetzung ein silikatbasiertes Bindemittel aufweist, wobei das silikatbasierte Bindemittel ein silanmodifizertes Silikat enthält, wobei das silanmodifizerte Silikat durch Hydrolyse eines Silans in Gegenwart eines Silikats bei einem basischen pH-Wert erhalten wird.

2. Wässrige Beschichtungszusammensetzung nach Anspruch 1, **dadurch gekennzeichnet, dass** die Beschichtungszusammensetzung einen pH-Wert im Bereich von 1 bis 14, insbesondere 2 bis 13, vorzugsweise 4 bis 12, bevorzugt 5 bis 11, aufweist.

3. Wässrige Beschichtungszusammensetzung nach Anspruch 1 oder 2, **dadurch gekennzeichnet, dass** die Beschichtungszusammensetzung die Metallpartikel in Mengen von 30 bis 95 Gew.-%, insbesondere 32 bis 90 Gew.-%, vorzugsweise 34 bis 90 Gew.-%, bevorzugt 40 bis 85 Gew.-%, besonders bevorzugt 45 bis 80 Gew.-%, bezogen auf die Beschichtungszusammensetzung, aufweist.

4. Wässrige Beschichtungszusammensetzung nach einem der vorangehenden Ansprüche, **dadurch gekennzeichnet, dass** die Metallpartikel ausgewählt sind aus Partikeln (Pigmenten) des Eisens, Nickels, Chroms, Magnesiums, Aluminiums, Zinks, und deren Mischungen und Legierungen, vorzugsweise ausgewählt sind aus Partikeln (Pigmenten) des Magnesiums, Aluminiums, Zinks, und deren Mischungen und Legierungen.

5. Wässrige Beschichtungszusammensetzung nach Anspruch 4, **dadurch gekennzeichnet, dass** die Metallpartikel ausgewählt sind aus Partikeln des Zinks, aus Zinklegierungen und deren Mischungen.

6. Wässrige Beschichtungszusammensetzung nach einem der vorangehenden Ansprüche, **dadurch gekennzeichnet, dass** das Silikat des silanmodifizerten Silikats ein Wasserglas ist.

7. Wässrige Beschichtungszusammensetzung nach Anspruch 6, **dadurch gekennzeichnet, dass** das Wasserglas ausgewählt ist aus der Gruppe von Lithiumwasserglas, Natriumwasserglas, Kaliumwasserglas und deren Mischungen, vorzugsweise ausgewählt ist aus der Gruppe von Natriumwasserglas, Kaliumwasserglas und deren Mischungen.

8. Wässrige Beschichtungszusammensetzung nach einem der vorangehenden Ansprüche, **dadurch gekennzeichnet, dass** das Silan des silanmodifizerten Silikats ausgewählt ist aus der Gruppe von ein epoxyfunktionellen Silanen, phenoxyfunktionellen Silanen, vinylfunktionellen Silanen, aminofunktionellen Silanen und deren Mischungen.

9. Wässrige Beschichtungszusammensetzung nach einem der vorangehenden Ansprüche, **dadurch gekennzeichnet, dass** die Beschichtungszusammensetzung das silikatbasierte Bindemittel in Mengen von 1 bis 30 Gew.-%, insbesondere 1 bis 20 Gew.-%, vorzugsweise 2 bis 15 Gew.-%, bevorzugt 3 bis 10 Gew.-%, besonders bevorzugt 4 bis 8 Gew.-%, bezogen auf die Beschichtungszusammensetzung, aufweist.

10. Wässrige Beschichtungszusammensetzung nach einem der vorangehenden Ansprüche, **dadurch gekennzeichnet, dass** die Beschichtungszusammensetzung Wasser in Mengen von mindestens 3 Gew.-%, insbesondere mindestens 5 Gew-%, vorzugsweise mindestens 7 Gew.-%, bevorzugt mindestens 8 Gew.-%, besonders bevorzugt mindestens 10 Gew.-%, bezogen auf die Beschichtungszusammensetzung, aufweist.

11. Verwendung einer wässrigen Beschichtungszusammensetzung nach einem der Ansprüche 1 bis 10 zur Herstellung einer Korrosionsschutzbeschichtung, insbesondere einer kathodischen Korrosionsschutzbeschichtung.

12. Verfahren zur Beschichtung eines Substrats, **dadurch gekennzeichnet, dass** eine Beschichtungszusammensetzung nach einem der Ansprüche 1 bis 10 auf ein Substrat aufgebracht und anschließend getrocknet wird.

13. Beschichtung, erhältlich nach einem Verfahren nach Anspruch 12 oder mit einer Beschichtungszusammensetzung nach einem der Ansprüche 1 bis 10.

14. Beschichtung nach Anspruch 13, **dadurch gekennzeichnet, dass** die Beschichtung eine Schichtdicke im Bereich von 1 bis 150 µm, insbesondere 1 bis 120 µm, vorzugsweise 1 bis 110 µm, bevorzugt 2 bis 100 µm, besonders bevorzugt 5 bis 100 µm, aufweist.

15. Verfahren zur Herstellung einer Beschichtungszusammensetzung nach einem der Ansprüche 1 bis 10, **dadurch gekennzeichnet, dass** mindestens ein Silan in Gegenwart mindestens eines Silikats bei einem pH-Wert gleich oder größer 8 hydrolysiert wird.
